# EUROPÄISCHE PATENTSCHRIFT

(11) **EP 2 488 056 B1**
(45) Veröffentlichungstag und Bekanntmachung des Hinweises auf die Patenterteilung: **31.07.2013**
(21) Anmeldenummer: 10781816.3
(22) Anmeldetag: 18.10.2010
(51) Int. Cl.: A41D 1/08, B62J 1/26, B68G 1/00, B68G 5/00

(54) **KISSEN MIT DÄMPFUNGSEIGENSCHAFTEN**
CUSHION HAVING DAMPING PROPERTIES
COUSSIN À PROPRIÉTÉS D'AMORTISSEMENT

(30) Priorität: 16.10.2009 DE 202009014105 U
(43) Veröffentlichungstag der Anmeldung: 22.08.2012
(73) Patentinhaber: X-Technology Swiss GmbH, 8832 Wollerau (CH)
(72) Erfinder: LAMBERTZ, Bodo, W., CH-8808 Pfäffikon (CH)
(74) Vertreter: Tarvenkorn, Oliver
(86) Internationale Anmeldenummer: PCT/EP2010/006336
(87) Internationale Veröffentlichungsnummer: WO 2011/045082

(56) Entgegenhaltungen:
- CA-A1- 2 249 112
- DE-A1- 4 005 565
- DE-U1-202005 011 552
- US-A1- 2006 191 052

## Beschreibung

Die Erfindung betrifft ein Kissen mit Dämpfungseigenschaften für Fahrradhosen, umfassend eine Außenhülle und einen Kern sowie mindestens eine zwischen Außenhülle und Kern angeordnete Schicht.

Kissen mit Dämpfungseigenschaften sind in vielfältiger Weise bekannt. In der einfachsten Form bestehen diese Kissen aus einer Füllung aus Schaumstoff, die mit Textilien oder Kunststoffen umgeben ist. Sie dienen in der Regel als Sitzkissen. Zudem sind einfache Luftkissen bekannt, die lediglich aus einer luftdichten Außenhülle bestehen und bei denen die Dämpfung durch die eingeschlossene Luft erfolgt. Die aufblasbaren Kissen können in den zu polsternden Gegenständen wie beispielsweise Sitzflächen oder dergleichen angeordnet sein siehe zum Beispiel US 2006/0191052. Auch finden aufblasbare Luftkissen als Wärmeschutz in Bekleidungsstücken Anwendung.

Die vorgenannten Kissen sind in ihrer Struktur einfach aufgebaut. Dadurch bedingt haben sie nur relativ geringe Dämpfungseigenschaften bzw. sind von ihrer Handhabung schwierig. Insbesondere die mit Luft gefüllten Kissen weisen das Problem auf, dass bei einer Verletzung der Außenhülle die Luft entweichen kann und die Dämpfungseigenschaften verloren gehen. Eine Beschädigung tritt häufig insbesondere bei den hier betrachteten Fahrradhosen auf, da die Polster mit der dünnen Außenhülle im außerordentlich hoch belasteten Bereich des Schritts angeordnet sind.

Hier will die Erfindung Abhilfe schaffen. Der Erfindung liegt die Aufgabe zu Grunde, ein Kissen mit Dämpfungseigenschaften für Fahrradhosen zu schaffen, welches einerseits einen hohen Dämpfungsgrad aufweist und zudem in seinen Dämpfungseigenschaften veränderbar ist. Gemäß der Erfindung wird diese Aufgabe dadurch gelöst, dass der Kern und die Schichten von mindestens einem Füllmaterial gebildet sind, welche unterschiedliche Härtegrade aufweisen und der Kern und / oder die Schichten durch Aufblasen in ihren Dämpfungseigenschaften veränderbar sind.

Mit der Erfindung ist ein Kissen mit Dämpfungseigenschaften für Fahrradhosen geschaffen, welches veränderbare Dämpfungseigenschaften aufweist. Durch die Zuführung der Luft in die aufblasbare Schicht mit dem darin angeordneten Füllmaterial besteht die Möglichkeit, die Dämpfungseigenschaften zu erhöhen oder zu verringern. Die Zuführung von Luft führt zu einem Aufblähen des Kissens, wodurch eine Erhöhung der Dämpfungseigenschaften hervorgerufen ist. Umgekehrt führt ein Ablassen der Luft zu einer Verringerung der Dämpfungseigenschaften, bei gleichzeitiger Verringerung des Volumens des Kissens.

In Ausgestaltung der Erfindung ist das Füllmaterial Silikon. Die Verwendung von Silikon als Füllmaterial bietet den Vorteil, dass Silikon in verschiedenen Klassifizierungen als Flüssigkeit, Kautschuk oder Elastomer verfügbar ist und somit ein breit gefächertes Spektrum für das Füllmaterial zur Verfügung steht.

In anderer Ausgestaltung der Erfindung ist das Füllmaterial ein offenporiger Schaum. Die Verwendung des offenporigen Schaums bietet insbesondere die Möglichkeit, diesen durch Zuführung von Luft aufzublasen und damit eine Veränderung der Dämpfungseigenschaften hervorzurufen.

Vorteilhaft ist ein Ventil vorgesehen. Mit Hilfe des Ventils besteht die Möglichkeit, mit dem Mund Luft in das Kissen einzublasen. Ebenso besteht die Möglichkeit, wunschgemäß mit Hilfe des Ventils Luft aus dem Kissen abzulassen.

Vorteilhaft sind der Kern und / oder die Schichten selbstaufblasend. Bei den selbstaufblasenden Kissen ist in komprimiertem Zustand-keine Luft in dem Kern und / oder den Schichten enthalten; sobald das Ventil geöffnet wird, dehnt sich das verwendete elastische Füllmaterial aus, wodurch das Kissen seine ursprüngliche Form wieder einnimmt. Dabei wird Luft in das Füllmaterial eingesaugt, die in dem Füllmaterial verbleibt, solange das Ventil verschlossen ist. Durch Öffnen des Ventils und gleichzeitiger Ausübung eines Drucks auf das Kissen kann die Luft aus dem Kern / der Schicht wieder entweichen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die schematische Darstellung des Querschnitts durch ein erfindunggemäßes Kissen in aufgeblasenem Zustand und
- Fig. 2: die schematische Darstellung des in Fig. 1 dargestellten Kissens in nur teilweise aufgeblasenem Zustand.

Das als Ausführungsbeispiel gewählte Kissen 1 umfasst eine Außenhülle 2 und einen Kern 3. Zwischen der Außenhülle 2 und dem Kern 3 ist eine Schicht 4 an- - geordnet. Das Kissen 1 ist mit einem Ventil 5 versehen, welches die Außenhülle 2 sowie die Schicht 4 durchsetzt und somit in den Kern 3 ragt. Das Ventil 5 ist zum Aufblasen mit dem Mund vorgesehen. In Abwandlung des Ausführungsbeispiels kann das Ventil 5 auch als Rückschlagventil ausgebildet sein.

Im Ausführungsbeispiel ist die Außenhülle 2 luftdurchlässig ausgebildet. Sie ist dehnbar, um einer Formänderung durch Belastung sowie durch ein Aufblasen des Kissens nachgeben zu können. Der Kern 3 und die Schicht 4 sind von mindestens einem Füllmaterial gebildet. Sie weisen unterschiedliche Härtegrade auf. Im Ausführungsbeispiel ist das Füllmaterial für die Schicht 4 ein festes Silikon; das Füllmaterial für den Kern 3 ist ein geschäumtes Silikon. Das geschäumte Silikon des Kerns 3 beinhaltet Lufteinschlüsse, die in den Figuren mit "6" gekennzeichnet sind.

In Abwandlung des Ausführungsbeispiels ist es möglich, zwischen der Außenhülle 2 und dem Kern 3 mehrere Schichten 4 vorzusehen. In diesem Falle können die einzelnen Schichten ebenfalls unterschiedliche Härtegrade aufweisen. So ist es beispielsweise möglich, vergleichbar zum in den Figuren dargestellten Ausführungsbeispiel den Kern 3 aus geschäumtem Silikon und die äußere, zur Außenhülle 2 benachbarte Schicht aus festem Silikon herzustellen. Zwischen Kern 3 und der dann äußeren Schicht 4 kann eine weitere - nicht dargestellte - Schicht, die als Füllmaterial flüssiges Silikon aufweist, angeordnet sein. In Abwandlung des Ausführungsbeispiels besteht auch die Möglichkeit, an Stelle des geschäumten Silikons einen offenporigen Schaum zu verwenden, bei dem es sich beispielsweise um einen Polyurethanschaum handeln kann. Auch die Verwendung von Polyetherschäumen ist möglich.

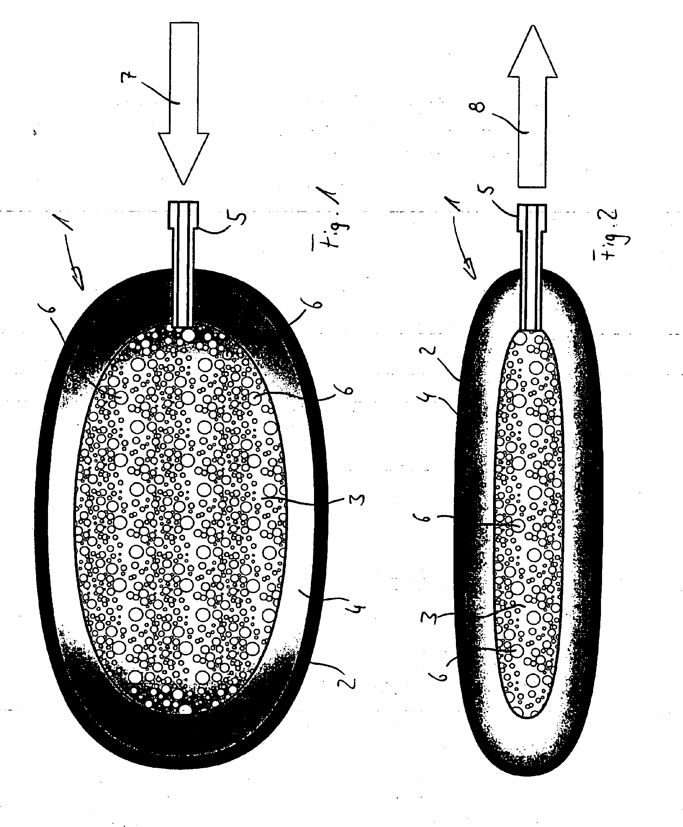

Der Kern 3 ist im Ausführungsbeispiel durch Aufblasen in seinen Dämpfungseigenschaften veränderbar. Hierzu kann entsprechend dem in Figur 1 dargestellten Pfeil 7 Luft durch das Ventil 5 in den Kern eingeblasen werden. Hierdurch bläht sich das Kissen auf, wodurch seine Dämpfungseigenschaften verbessert sind. In umgekehrter Weise kann zur Reduzierung des Volumens und zur Reduzierung der Dämpfungseigenschaften des Kissens Luft durch das Ventil 5 abgelassen werden, wie dies der in Figur 2 dargestellte Pfeil 8 symbolisiert. Es ist möglich, den Kern 3 und / oder die Schichten 4 selbstaufblasend auszugestalten. In diesem Falle ist in einfacher Weise das Ventil 5 zu öffnen, um eine Vergrößerung des Volumens des Kissens 1 zu ermöglichen. So kann beispielsweise zum Transport das Kissen komprimiert sein und das Ventil geschlossen sein. Zur Benutzung des Kissens 1 wird das Ventil 5 geöffnet, wodurch das Füllmaterial im Kern 3 nach dem Ausführungsbeispiel seiner natürlichen Expansion folgend sich vergrößert und Luft in den Kern 3 eingesogen wird. Nach Schließen des Ventils ist somit auch eine verbesserte Dämpfungseigenschaft des Kissens hervorgerufen.

Das Kissen 1 findet Verwendung als Polster in Fahrradhosen. Es ist im Schritt der Fahrradhosen angeordnet. Eine solche Anordnung ist beispielsweise aus der US 6 928 665 B1 bekannt. Das Kissen weist dann in seiner einfachsten Form Dammbereich auf, der den Schrittteil der Fahrradhose überdeckt. Auch ist ein Gesäßbackenbereich vorgesehen, der den Sattelbereich 5 der Hose überdeckt. Neben der Verbesserung der Dämpfungseigenschaften an sich ist bei dem erfindungsgemäßen Kissen durch die Zuführung der Luft in die aufblasbare Schicht mit dem darin angeordneten Füllmaterial eine Variierung der Dämpfungseigenschaften möglich. Somit ist erstmalig die Anpassung der Dämpfungseigenschaften an das Empfinden des jeweiligen Radsportlers möglich, wohingegen bei den bekannten Polstern in Radfahrhosen eine Veränderung der Dämpfung nicht möglich ist.

## Patentansprüche

1. Kissen mit Dämpfungseigenschaften für Fahrradhosen umfassend eine Außenhülle (2) und einen Kern (3) sowie mindestens eine zwischen Außenhülle und Kern angeordnete Schicht, **dadurch gekennzeichnet, dass** der Kern (3) und die Schichten (4) von mindestens einem Füllmaterial gebildet sind, welche unterschiedliche Härtegrade aufweisen und der Kern (3) und/oder die Schichten (4) durch Aufblasen in ihren Dämpfungseigenschaften veränderbar sind.

2. Kissen nach Anspruch 1, **dadurch gekennzeichnet, dass** das Füllmaterial Silikon ist.

3. Kissen nach Anspruch 1, **dadurch gekennzeichnet, dass** das Füllmaterial ein offenporiger Schaum ist.

4. Kissen nach einem oder mehreren der vorgenannten Ansprüche, **dadurch gekennzeichnet, dass** ein Ventil (5) zum Aufblasen mit dem Mund vorgesehen ist.

5. Kissen nach einem oder mehreren der vorgenannten Ansprüche, **dadurch gekennzeichnet, dass** das Ventil (5) ein Rückschlagventil ist.

6. Kissen nach einem oder mehreren der vorgenannten Ansprüche, **dadurch gekennzeichnet, dass** der Kern (3) und/oder die Schichten (4) selbstaufblasend sind.

7. Kissen nach einem oder mehreren der vorgenannten Ansprüche, **dadurch gekennzeichnet, dass** die Außenhülle (2) luftdurchlässig ausgebildet ist.

8. Kissen nach einem oder mehreren der vorgenannten Ansprüche, **dadurch gekennzeichnet, dass** zwischen der Außenhülle (2) und dem Kern (3) mehrere Schichten (4) vorgesehen sind.

9. Kissen nach Anspruch 8, **dadurch gekennzeichnet, dass** die einzelnen Schichten (4) unterschiedliche Härtegrade aufweisen.

10. Verwendung der Kissen nach einem der vorherigen Ansprüche als Polster in Fahrradhosen.

11. Verwendung nach Anspruch 10, **dadurch gekennzeichnet, dass** die Kissen im Schritt angeordnet sind.

12. Fahrradhose umfassend mindestens ein Kissen als Polster nach einem der Ansprüche 1 bis 9.

13. Fahrradhose nach Anspruch 12, **dadurch gekennzeichnet, dass** die Kissen im Schritt angeordnet sind.

## Claims

1. A cushion with damping properties for cycling shorts comprising an outer shell (2) and a core (3) as well as at least one layer arranged between the outer shell and the core, **characterised in that** the core (3) and the layers (4) are formed by at least one filling material which have different degrees of hardness and the core (3) and/or the layers (4) is or are capable of being altered in the damping properties thereof by inflation.

2. A cushion according to claim 1, **characterised in that** the filling material is silicone.

3. A cushion according to claim 1, **characterised in that** the filling material is an open-pore foam.

4. A cushion according to one or more of the preceding claims, **characterised in that** a valve (5) is provided for inflation with the mouth.

5. A cushion according to one or more of the preceding claims, **characterised in that** the valve (5) is a non-return valve.

6. A cushion according to one or more of the preceding claims, **characterised in that** the core (3) and/or the layers (4) are self-inflating.

7. A cushion according to one or more of the preceding claims, **characterised in that** the outer shell (2) is made air-permeable.

8. A cushion according to one or more of the preceding claims, **characterised in that** a plurality of layers (4) are provided between the outer shell (2) and the core (3).

9. A cushion according to claim 8, **characterised in that** the individual layers (4) have different degrees of hardness.

10. Use of the cushions according to any one of the preceding claims as a padding in cycling shorts.

11. Use according to claim 10, **characterised in that** the cushions are arranged in the crotch.

12. Cycling shorts comprising at least one cushion as a padding according to any one of claims 1 to 9.

13. Cycling shorts according to claim 12, **characterised in that** the cushions are arranged in the crotch.

## Revendications

1. Coussin présentant des propriétés d'amortissement pour culottes pour cycliste, comprenant une enveloppe extérieure (2) et un noyau (3) ainsi qu'au moins une couche disposée entre l'enveloppe extérieure et le noyau, **caractérisé en ce que** le noyau (3) et les couches (4) sont formés par au moins un matériau de remplissage et présentent un degré de dureté différent, et **en ce que** les propriétés d'amortissement du noyau (3) et/ou des couches (4) peuvent être modifiées par le gonflage.

2. Coussin selon la revendication 1, **caractérisé en ce que** le matériau de remplissage est du silicone.

3. Coussin selon la revendication 1, **caractérisé en ce que** le matériau de remplissage est une mousse à pores ouverts.

4. Coussin selon l'une quelconque ou plusieurs des revendications précédentes, **caractérisé en ce qu'**une valve (5) est prévue pour le gonflage à la bouche.

5. Coussin selon l'une quelconque ou plusieurs des revendications précédentes, **caractérisé en ce que** la valve (5) est une valve anti-retour.

6. Coussin selon l'une quelconque ou plusieurs des revendications précédentes, **caractérisé en ce que** le noyau (3) et/ou les couches (4) sont autogonflants.

7. Coussin selon l'une quelconque ou plusieurs des revendications précédentes, **caractérisé en ce que** l'enveloppe extérieure (2) est réalisée de manière perméable à l'air.

8. Coussin selon l'une quelconque ou plusieurs des revendications précédentes, **caractérisé en ce que** plusieurs couches (4) sont prévus entre l'enveloppe extérieure (2) et le noyau (3).

9. Coussin selon la revendication 8, **caractérisé en ce que** les diverses couches (4) présentent des degrés de dureté différents.

10. Utilisation des coussins selon 1"une quelconque des revendications précédentes comme rembourrage dans des culottes de cycliste.

11. Utilisation selon la revendication 10, **caractérisée en ce que** les coussins sont disposés dans l'entrejambe.

12. Culotte de cycliste comprenant au moins un coussin en tant que rembourrage selon 1"une quelconque des revendications 1 à 9.

13. Culotte de cycliste selon la revendication 12, **caractérisée en ce que** les coussins sont disposés dans l'entrejambe.
